(19) Europäisches Patentamt
European Patent Office
Office européen des brevets

(11) Veröffentlichungsnummer: **0 023 230**
**B1**

(12) # EUROPÄISCHE PATENTSCHRIFT

(45) Veröffentlichungstag der Patentschrift: **16.05.84**

(51) Int. Cl.³: **G 01 N 31/16,** G 01 N 33/18

(21) Anmeldenummer: **79102673.5**

(22) Anmeldetag: **26.07.79**

(54) **Reagenz zur quantitativen Bestimmung von Wasser und seine Verwendung zur quantitativen Bestimmung von Wasser.**

(43) Veröffentlichungstag der Anmeldung:
**04.02.81 Patentblatt 81/5**

(45) Bekanntmachung des Hinweises auf die Patenterteilung:
**16.05.84 Patentblatt 84/20**

(84) Benannte Vertragsstaaten:
**AT BE CH DE FR GB IT LU NL SE**

(56) Entgegenhaltungen:
**DE - A - 2 040 271**
**DE - B - 1 075 341**
**FR - A - 1 076 005**
**US - A - 3 528 775**
**US - A - 3 656 907**

(73) Patentinhaber: **J.T. Baker Chemicals B.V., P.O. Box 1 Rijstenborgherweg 20, NL-7400 AA Deventer (NL)**

(72) Erfinder: **Verbeek, Antonie Egbert, Groenewold 11, Deventer (NL)**
Erfinder: **Mattheij, Jozef Maria Johannes, Deltalaan 181, Deventer (NL)**

(74) Vertreter: **Vossius Vossius Tauchner Heunemann Rauh, Siebertstrasse 4 P.O. Box 86 07 67, D-8000 München 86 (DE)**

EP 0 023 230 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Reagenz zur quantitativen Bestimmung von Wasser und seine Verwendung zur quantitativen Bestimmung von Wasser

Die übliche Methode zur quantitativen Bestimmung des Wassers ist die Karl Fischer-Methode, bei der die zu untersuchende Substanz mit einer Lösung von Schwefeldioxid und Jod in einem Gemisch aus Pyridin und Methanol umgesetzt wird; vgl. K. Fischer, Angew. Chemie, Bd. 48 (1935), S. 394. Mit Wasser setzt sich das Reagenz unter Entfärbung zu Pyridinsulfat und Jodwasserstoff um. Der Jodverbrauch ist ein Maß für den Wassergehalt der Substanz. Die Reaktion verläuft nach folgender Gleichung:

$$SO_2 + J_2 + 2\,H_2O \rightarrow H_2SO_4 + 2\,HJ$$

Die maßanalytische Bestimmung ist sehr genau. Mit dem Reagenz ist noch ein Wassergehalt unter 0,01% nachweisbar; vgl. Kirk-Othmer, Encyclopedia of Chemical Technology, 2. Aufl., Bd. 2 (1963), S. 673—677.

Nachteilig ist bei der Karl Fischer-Methode der langsame Reaktionsablauf, das dadurch verursachte mühsame, langwierige Titrieren und der verzerrte Endpunkt. Störend wird die Geruchsbelästigung durch Schwefeldioxid und Pyridin empfunden. Pyridin macht zudem das Arbeiten im Abzug erforderlich. Nachteilig ist die Bildung des gelben $SO_2J^-$ Komplexes durch Schwefeldioxid und Jodid, der die visuelle Endpunktbestimmung ausschließt.

Die begrenzte Lebensdauer, der unbeständige Titer sowie der Zwang zur dunklen und gekühlten Lagerung sind weitere Hindernisse.

Die begrenzte Anwendungsmöglichkeit und das wenig konstante Titrationsmilieu kennzeichnen zusätzlich die Probleme, die sich dem Analytiker trotz wesentlicher Verbesserung der Karl Fischer-Methode stellen.

In der DE-A-20 40 271 und der DE-B-10 75 341 sind einteilige (»klassische«) Lösungen des Karl-Fischer-Reagenz, in denen Pyridin und Jod enthalten sind, offenbart. Die in diesen Druckschriften erwähnte Verbesserung der Haltbarkeit der Lösungen betrifft stets die Vermeidung der bekannten spontanen Seitenreaktionen, die zwischen dem Jod, Schwefeldioxid und den restlichen Verbindungen im einteiligen Reagenz stattfinden.

Bei einer bekannten Weiterentwicklung dieser Karl Fischer-Methode werden die Probleme der titrimetrischen Wasserbestimmung vermieden; vgl. J. C. Verhoef und E. Barendrecht, Analytica Chimica Acta, Bd. 94 (1977), S. 395—403. Bei dieser verbesserten Methode werden zwei Reagenzien verwendet, nämlich eine Lösung von Natriumacetat und Schwefeldioxid in Methanol (Lösung A) und eine Lösung von Jod in Methanol (Titrationslösung B).

Auch in der US-A-36 56 907 wird ein einteiliges modifiziertes Karl-Fischer-Reagenz beschrieben, bei dem anstelle des üblichen Schwefeldioxids ein Sulfoxid oder ein organisches Nitrit eingesetzt wird, und bei dem das Pyridin durch eine im wesentlichen geruchlose Base mit Pyridinskelett ersetzt wurde.

Beispielsweise beträgt in der Lösung A die Molarität für Natriumacetat 0,5 und die Molarität für Schwefeldioxid ebenfalls 0,5. Die Farbe der Lösung beträgt nach APHA 10 und der Blindwert 0 bis 4 ml Titrationslösung B für 20 ml Lösung A.

Die Titrationslösung B hat einen konstanten Titer von 3,5 mg $H_2O$/ml. Es wird etwa 1 Teil Titrationslösung B auf 2 Teile Lösung A benötigt.

Der Titriervorgang läuft wie folgt ab: Es werden 20 ml der Lösung A mit der Titrationslösung B unter stetem Rühren und unter Ausschluß von Feuchtigkeit vortitriert. Dann gibt man eine bestimmte Menge der zu untersuchenden wasserhaltigen Substanz rasch in das Titrationsgefäß. Die Menge der zu untersuchenden Substanz (Probemenge) soll im rechten Verhältnis zur geschätzten vorhandenen Wassermenge stehen.

Unter Berücksichtigung der Pufferkapazität können 50 bis 60 mg Wasser in 20 ml der Lösung A bestimmt werden. Das Titrationsgefäß wird verschlossen, die Bürette eingestellt und jetzt mit dem Titrieren begonnen. Die Lösung ist während des gesamten Titriervorganges gründlich mit einem Magnetrührer zu mischen.

Die bipotentiometrische Methode wird bei den gebräuchlichsten Titrationen als Endpunktbestimmung angewandt. Die Reduktionszeit wird dabei normalerweise auf den Äquivalenzpunkt bei 20 Sekunden festgesetzt.

Tritt vor dem Endpunkt eine Gelbfärbung auf, war die Pufferkapazität nicht ausreichend. Dies kann durch Vermindern der Probemenge oder Erhöhen der Menge an Lösung A erreicht werden.

Mit dieser Methode können Wasserbestimmungen bei Alkoholen, Alkanen, aromatischen Kohlenwasserstoffen, Aldehyden, Ketonen, Äthern, Estern, Salzen mit Kristallwasser, basischen Substanzen, wie Tris, lyophilisierten Produkten, Lebensmitteln, Molekularsieben und gekörnten Düngemitteln ohne Störung durchgeführt werden. Mit dieser Methode ist auch eine visuelle Endpunktbestimmung möglich.

Diese Methode hat den Nachteil, daß beim Stehen der Lösung A alsbald eine milchigweiße Trübung oder Fällung entsteht, die insbesondere bei der visuellen Endpunktbestimmung stört. Weiterhin steigt

der Blindwert der Lösung A mit zunehmendem Alter und bei höheren Temperaturen unerwünscht stark an.

Der Erfindung liegt somit die Aufgabe zugrunde, ein Reagenz zur quantitativen Bestimmung von Wasser zu entwickeln, das aus der vorstehend beschriebenen Lösung A besteht, die zusammen mit der Titrierlösung B verwendet wird, und das beim Stehen keine Fällungen bildet und bei dem die Zunahme des Blindwerts auf ein Mindestmaß beschränkt ist.

Die Lösung dieser Aufgabe beruht auf dem überraschenden Befund, daß bei Verwendung von 2-Methoxyäthanol anstelle von Methanol oder eines Gemisches von 2-Methoxyäthanol und Methanol als Lösungsmittel für die Reagenzlösung A und durch eine Verminderung der Menge an Schwefeldioxid in der Lösung A die Bildung einer Fällung und die unerwünscht starke Zunahme des Blindwertes vermieden wird.

Die Erfindung betrifft somit ein Reagenzsystem zur quantitativen Bestimmung von Wasser, bestehend aus

a) einer Reagenzlösung A, enthaltend Schwefeldioxid in 0,1 bis 0,7molarer und ein wasserfreies Alkalimetallacetet in 0,5 bis 1,5molarer Lösung in wasserfreiem 2-Methoxyäthanol oder in einem wasserfreien Gemisch von 2-Methoxyäthanol und Methanol im Volumenverhältnis von mindestens 10 : 90 und
b) einer Titrierlösung B, bestehend aus einer 0,1 bis 0,3molaren Lösung von Jod in wasserfreiem 2-Methoxyäthanol, wasserfreiem Methanol oder einem wasserfreien Gemisch von 2-Methoxyäthanol und Methanol.

Als Alkalimetallacetat enthält die Lösung A der Erfindung vorzugsweise wasserfreies Natriumacetat oder wasserfreies Lithiumacetet. Aus wirtschaftlichen Gründen ist Natriumacetat bevorzugt. Das Alkalimetallacetat dient als Puffer. Das Alkalimetallacetet wird in einer Menge von 1,5 bis 0,5 molar, vorzugsweise von 1,2 bis 0,8 molar, insbesondere von 1,1 bis 0,9 molar verwendet.

Das Schwefeldioxid wird in einer Menge von 0,7 bis 0,1 molar, vorzugsweise von 0,5 bis 0,2 molar, insbesondere von 0, 30 bis 0,25 molar verwendet.

Für die Titrierlösung B wird das Jod in einer Menge von 0,3 bis 0,1 molar, vorzugsweise von 0,25 bis 0,15 molar, insbesondere von 0,23 bis 0,19 molar verwendet.

Selbstverständlich enthalten die Reagenzlösungen die Bestandteile in aufeinander abgestimmten Mengen.

Das für die Lösung A und die Titrierlösung B verwendete Lösungsmittel, d. h. das 2-Methoxyäthanol, das Methanol oder das Gemisch von 2-Methoxyäthanol und Methanol, soll möglichst wasserfrei sein. Unter wasserfrei werden hier Produkte mit einem Wassergehalt von höchstens 0,05 Gew.-% verstanden. Solche Produkte sind im Handel erhältlich.

Bei Verwendung eines Gemisches von 2-Methoxyäthanol und Methanol für die Lösung A beträgt das bevorzugte Volumenverhältnis 15 : 85 bis 25 : 75.

Die Herstellung der Reagenzien zur Wasserbestimmung erfolgt in der Praxis folgendermaßen:

a) zunächst wird unter Rühren in wasserfreies 2-Methoxyäthanol oder in ein Gemisch von wasserfreiem 2-Methoxyäthanol und wasserfreiem Methanol während 15 bis 30 min Stickstoff eingeleitet. Auf diese Weise werden geringe Mengen Luft bzw. Sauerstoff aus dem Lösungsmittel abgetrennt.
b) Sodann wird die gewünschte Menge wasserfreies Alkalimetallacetat (15 bis 30 Std. bei 120 bis 150° C getrocknet) in kleinen Anteilen und unter Rühren eingetragen und gelöst. Gleichzeitig wird Stickstoff in die Lösung eingeblasen.
c) Nach vollständigem Auflösen des Alkalimetallacetats wird in die Lösung unter Rühren noch weitere 15 bis 30 min Stickstoff eingeleitet.
d) Schließlich wird in die Lösung langsam die gewünschte Menge Schwefeldioxid eingeleitet. Es wird die Lösung A erhalten.

Die Titrierlösung B wird wie folgt hergestellt: In wasserfreies 2-Methoxyäthanol, wasserfreies Methanol oder ein Gemisch von wasserfreiem 2-Methoxyäthanol und wasserfreiem Methanol wird die gewünschte Menge Jod unter Rühren eingetragen und gelöst.

Die Lösung A der Erfindung ist bei maximal etwa 15° C und die Lösung B ist bei Raumtemperatur und in gut verschlossenen Flaschen gut haltbar.

Die nachstehenden Beispiele erläutern die Erfindung.

## Beispiel 1

In ein Gemisch von 120,1 kg wasserfreies Methanol und 36,5 kg wasserfreies 2-Methoxyäthanol wird 15 min unter Rühren Stickstoff eingeblasen. Sodann werden unter Rühren 15,6 kg während 24 Std. bei 150° C getrocknetes, wasserfreies Natriumacetat in kleinen Anteilen eingetragen und gelöst. Nach vollständiger Auflösung wird in die erhaltene Lösung noch weitere 15 min unter Rühren Stickstoff

eingeblasen. Sodann werden 6,1 kg Schwefeldioxid langsam innerhalb 4 Std. eingeleitet. Man erhält eine Lösung A, die zusammen mit einer Titrierlösung von Jod in Methanol, 2-Methoxyäthanol oder einem Gemisch von 2-Methoxyäthanol und Methanol zur quantitativen Bestimmung von Wasser verwendet werden kann.

Die Titrierlösung B *wird folgendermaßen hergestellt:*
in 79 kg wasserfreiem Methanol oder 96 kg wasserfreiem 2-Methoxyäthanol werden 5,4 kg Jod gelöst.

Beispiel 2

Gemäß Beispiel 1 wird die Lösung A hergestellt, jedoch werden anstelle des Gemischs von 2-Methoxyäthanol und Methanol 182,4 kg wasserfreies 2-Methoxyäthanol, 15,6 kg wasserfreies Natriumacetat und 6,1 kg Schwefeldioxid verwendet.

Beispiel 3

Beispiel 1 wird wiederholt, jedoch wird ein Gemisch von Methanol und 2-Methoxyäthanol im Volumenverhältnis von 75 : 25 bzw. 90 : 10 verwendet.

Auch diese Reagenzlösungen A können zusammen mit der Titrierlösung B zur quantitativen Bestimmung von Wasser verwendet werden.

Beispiel 4

Die Beispiele 1 bis 3 werden wiederholt, jedoch werden anstelle von 15,6 kg Natriumacetat 12,5 kg wasserfreies Lithiumacetat verwendet.

Auch diese Lösungen können auf die vorstehend beschriebene Weise mit Erfolg zur quantitativen Bestimmung von Wasser eingesetzt werden.

Beispiel 5

Beispiel 1 wird wiederholt, jedoch werden anstelle von 6,1 kg Schwefeldioxid 3,33 kg Schwefeldioxid verwendet.

In der nachstehenden Tabelle ist die Stabilität des Blindwerts (Verbrauch Titrierlösung B pro 20 ml Lösung A) der gemäß Beispiel 1 und 5 hergestellten Lösungen A angegeben.

| | Beispiel 1 | Beispiel 5 |
|---|---|---|
| bei 5° C | | |
| nach 2 Wochen | 0,9 ml | 1,2 ml |
| nach 3 Wochen | 0,9 ml | 1,2 ml |
| bei 20° C | | |
| Anfang | 0,9 ml | 1,2 ml |
| nach 2 Wochen | 1,8 ml | 1,4 ml |
| nach 3 Wochen | 2,2 ml | 1,6 ml |
| bei 40° C | | |
| nach 2 Wochen | 4,3 ml | 2,2 ml |
| nach 3 Wochen | 6,1 ml | 2,7 ml |

Aus der Tabelle ist ersichtlich, daß der Blindwert stabiler bleibt, wenn die Lösung weniger Schwefeldioxid enthält.

In den nachstehenden Versuchen wird die Verwendung der Reagenzlösungen der Erfindung zur quantitativen Bestimmung von Wasser beschrieben.

Versuch A

Mit der Reagenzlösung von Beispiel 1 und der Titrierlösung B wird Wasser in Petroläther Kp. 100—140° C bestimmt. Der Versuch wird folgendermaßen durchgeführt:

20 ml der Lösung A werden mit der Titrierlösung B unter Rühren und Schütteln des Reaktionsgefäßes und unter Ausschluß von Feuchtigkeit vortitriert. Sodann werden 25 ml Petroläther rasch in das Titriergefäß gegeben. Nach dem Verschließen des Titriergefäßes und Einstellen der Bürette wird mit der Titration begonnen. Es werden 0,18 ml Titrierlösung B verbracht. Dies entspricht einem Wassergehalt des Petroläthers von 0,004 Prozent.

Versuch B

Der Versuch A wird mit der Reagenzlösung von Beispiel 4 wiederholt. Der Petroläther hat einen Wassergehalt von 0,004 Prozent.

In einem weiteren Versuch wird die Reagenzlösung von Beispiel 4 zur Wasserbestimmung von technischem Aceton verwendet. 5 ml Aceton werden in das Titriergefäß gegeben und verbrauchen 2,28 ml Titrierlösung B. Dies entspricht einem Wassergehalt des Acetons von 0,26 Prozent.

Versuch C

Versuch A wird mit der Reagenzlösung von Beispiel 1 und Beispiel 5 wiederholt. Es werden folgende Ergebnisse erhalten:

Wassergehalt des Petroläthers bei Verwendung der Reagenzlösung von Beispiel 1 = ,004 Prozent

Wassergehalt des Petroläthers bei Verwendung der Reagenzlösung von Beispiel 5 = 0,004 Prozent

In einem weiteren Versuch mit der Reagenzlösung von Beispiel 5 wird der Wassergehalt von Speiseöl bestimmt. Der Versuch wird folgendermaßen durchgeführt:

20 ml der Lösung A werden mit der Titrierlösung B unter Rühren und Schütteln des Reaktionsgefäßes und unter Ausschluß von Feuchtigkeit vortitriert. Sodann werden 10 ml Speiseöl rasch in das Titriergefäß gegeben. Nach dem Verschließen des Titriergefäßes und Einstellen der Bürette wird mit der Titration begonnen. Es werden 1,13 ml Titrierlösung B verbraucht. Dies entspricht einem Wassergehalt des Speiseöls von 0,05 Prozent.

**Patentansprüche**

1. Reagenzsystem zur quantitativen Bestimmung von Wasser, bestehend aus

a) einer Reagenzlösung A, enthaltend Schwefeldioxid in 0,1 bis 0,7 molarer und ein wasserfreies Alkalimetallacetat in 0,5 bis 1,5 molarer Lösung in wasserfreiem 2-Methoxyäthanol oder in einem wasserfreien Gemisch von 2-Methoxyäthanol und Methanol im Volumenverhältnis von mindestens 10 : 90 und

b) einer Titrierlösung B, bestehend aus einer 0,1 bis 0,3 molaren Lösung von Jod in wasserfreiem 2-Methoxyäthanol, wasserfreiem Methanol oder einem wasserfreien Gemisch von 2-Methoxyäthanol und Methanol.

2. Reagenzsystem nach Anspruch 1, dadurch gekennzeichnet, daß das Alkalimetallacetat wasserfreies Lithiumacetat ist.

3. Reagenzsystem nach Anspruch 1, dadurch gekennzeichnet, daß das Alkalimetallacetat wasserfreies Natriumacetat ist.

4. Reagenzsystem nach einem der Ansprüche 1 bis 3, dadurch gekennzeichnet, daß das Gemisch von 2-Methoxyäthanol und Methanol der Reagenzlösung A ein Volumenverhältnis von 15 : 85 bis 25 : 75 aufweist.

5. Verwendung des Reagenzsystems nach Anspruch 1 zur quantitativen Bestimmung von Wasser.

**Claims**

1. Reagent system for the quantitative determination of water, consisting of

a) a reagent solution A, containing sulphur dioxide in 0,1 to 0,7 molar solution and an anhydrous alkali metal acetate in 0,5 to 1,5 molar solution in anhydrous 2-methoxyethanol or in an anhydrous mixture of 2-methoxyethanol and methanol in a volume ratio of at least 10 : 90 and

b) a titration solution B consisting of a 0,1 to 0,3 molar solution of iodine in anhydrous 2-methoxyethanol, anhydrous methanol or an anhydrous mixture of 2-methoxyethanol and methanol.

2. Reagent system according to claim 1, characterized in that the alkali metal acetate is an anhydrous lithium acetate.

3. Reagent system according to claim 1, characterized in that the alkali metal acetate is an anhydrous sodium acetate.

4. Reagent system according to any of claims 1 to 3, characterized in that the mixture of 2-methoxyethanol and methanol in the reagent solution A has a volume ratio of 15 : 85 to 25 : 75.

5. Use of the reagent system according to claim 1 for the quantitative determination of water.

**Revendications**

1. Système réactif pour le dosage de l'eau, consistant en:

a) une solution de réactif A contenant de l'anhydride sulfureux en solution 0,1 à 0,7 molaire et un acétate de métal alcalin anhydre en solution 0,5 à 1,5 molaire dans du 2-méthoxyéthanol anhydre ou dans un mélange anhydre de 2-méthoxyéthanol et de méthanol à un rapport eu volume d'au moins 10 : 90, et

b) une solution de titrage B consistant en une solution 0,1 à 0,3 molaire d'iode dans du 2-méthoxyéthanol anhydre, du méthanol anhydre ou un mélange anhydre de 2-méthoxyéthanol et de méthanol.

2. Système réactif selon la revendication 1, caractérisé en ce que l'acétate de métal alcalin est de l'acétate de lithium anhydre.

3. Système réactif selon la revendication 1, caractérisé en ce que l'acétate de métal alcalin est de l'acétate de sodium anhydre.

4. Système réactif selon l'une des revendications 1 à 3, caractérisé en ce que le mélange de 2-méthoxyéthanol et de méthanol de la solution de réactif A est à un rapport en volume de 15 : 85 à 25 : 75.

5. Utilisation du système réactif selon la revendication 1 pour le dosage de l'eau.